# EUROPEAN PATENT APPLICATION

(11) **EP 4 629 348 A1**
(43) Date of publication of application: **08.10.2025**
(21) Application number: 22967622.6
(22) Date of filing: 09.12.2022
(51) Int. Cl.: H01M 4/66, H01M 4/13, H01M 10/0525

(54) **SECONDARY BATTERY AND ELECTRIC DEVICE**

(71) Applicant: Ningde Amperex Technology Limited, Ningde, Fujian 352100 (CN)
(72) Inventor: WANG, Shilei, Ningde, Fujian 352100 (CN)
(74) Representative: Icosa
(86) International application number: PCT/CN2022/137898
(87) International publication number: WO 2024/119474

(57) **Abstract**

This application provides a secondary battery and an electric apparatus. The secondary battery includes an electrode assembly of a stacked structure, where the electrode assembly includes a positive electrode plate and a negative electrode plate that are stacked, and a separator disposed between the positive electrode plate and the negative electrode plate. An outermost electrode plate of the electrode assembly is a single-sided positive electrode plate. The single-sided positive electrode plate includes a first positive electrode current collector and a positive electrode active material layer, the first positive electrode current collector includes a first polymer layer and a first conductive layer disposed on a surface of the first polymer layer facing towards an interior of the electrode assembly, and the positive electrode active material layer is disposed on the first conductive layer. Positive electrode plates other than the outermost electrode plate in the electrode assembly are double-sided positive electrode plates, the double-sided positive electrode plate includes a second positive electrode current collector and positive electrode active material layers disposed on two surfaces of the second positive electrode current collector, and at least one of the double-sided positive electrode plates has the second positive electrode current collector made of metal. The foregoing overall structure arrangement of the secondary battery improves the safety performance of the secondary battery.

## Description

### TECHNICAL FIELD

This application relates to the field of electrochemical technologies, and in particular, to a secondary battery and an electric apparatus.

### BACKGROUND

In recent years, secondary batteries represented by lithium-ion batteries have seen rapid application and popularization in the market. However, due to high reactivity of element lithium itself, lithium-ion batteries frequently experience safety incidents during use, which has become a key factor restricting the further promotion of lithium-ion batteries. Among the numerous safety incidents of lithium-ion batteries, one of the most typical safety accidents is short circuits caused by external forces such as impact squeezing the interior of electrode assemblies, and thermal runaway and fire caused subsequently. Sodium-ion batteries have similar principles and structures to lithium-ion batteries, and also carry certain risks of internal short circuits and thermal runaway.

Research indicates that internal short circuits in lithium-ion batteries and sodium-ion batteries mainly occur between positive electrode active materials, positive electrode current collectors, negative electrode active materials, and negative electrode current collectors. Short circuits between positive electrode current collectors and negative electrode active materials are considered the most dangerous ones because they can cause combustion of common carbon-based negative electrode active materials, and are also the primary short circuit mode leading to thermal runaway in lithium-ion and sodium-ion batteries. Thermal runaway significantly reduces the impact pass rate of lithium-ion and sodium-ion batteries, thereby affecting safety performance of batteries.

### SUMMARY

This application aims to provide a secondary battery and an electric apparatus, so as to improve the safety performance of the secondary battery.

It should be noted that, in this application, a lithium-ion battery is used as an example of a secondary battery to explain this application. However, the secondary battery in this application is not limited only to lithium-ion batteries, and is also applicable to sodium-ion batteries. Specific technical solutions are as follows.

A first aspect of this application provides a secondary battery including an electrode assembly of a stacked structure, where the electrode assembly includes a positive electrode plate and a negative electrode plate that are stacked, and a separator disposed between the positive electrode plate and the negative electrode plate. An outermost electrode plate of the electrode assembly is a single-sided positive electrode plate. The single-sided positive electrode plate includes a first positive electrode current collector and a positive electrode active material layer, the first positive electrode current collector includes a first polymer layer and a first conductive layer disposed on a surface of the first polymer layer facing towards an interior of the electrode assembly, and the positive electrode active material layer is disposed on the first conductive layer. Positive electrode plates other than the outermost electrode plate in the electrode assembly are double-sided positive electrode plates, the double-sided positive electrode plate includes a second positive electrode current collector and positive electrode active material layers disposed on two surfaces of the second positive electrode current collector, and at least one of the double-sided positive electrode plates has the second positive electrode current collector made of metal. In the foregoing electrode assembly, a composite current collector including the first polymer layer and the first conductive layer is used in the outermost single-sided positive electrode plate, making the thickness of the conductive material layer (that is, the first conductive layer) in the first positive electrode current collector of the outermost electrode plate of the electrode assembly smaller than the thickness of a positive electrode current collector entirely made of conductive metal such as aluminum in the prior art. This decreases the proportion of the conductive material layer in the first positive electrode current collector and reduces the proportion of the conductive material layer in the first positive electrode current collector of the outermost electrode plate within a fracture surface of the secondary battery. As a result, under conditions such as impact on the secondary battery, this reduces the likelihood of the current collector (that is, the first positive electrode current collector) of the outermost electrode plate participating in dangerous short circuits (that is, short circuits between the positive electrode current collector and the negative electrode active material layer), thereby lowering the risk of fire or explosion in the secondary battery. As a result, the safety performance of the secondary battery is improved. In addition, the positive electrode plates other than the outermost electrode plate in the electrode assembly are double-sided positive electrode plates to ensure the energy density of the electrode assembly. Costs can be reduced by setting the material of the current collector of at least one double-sided positive electrode plate to a metal material, that is, a traditional metal current collector, since composite current collectors are more expensive. It should be noted that it is well-known to those skilled in the art that there are two outermost electrode plates at the top and bottom of an electrode assembly of a stacked structure in a thickness direction. That is, the single-sided positive electrode plate in this application refers to two electrode plates at the top and bottom of the electrode assembly of a stacked structure in the thickness direction.

In some embodiments of this application, the second positive electrode current collectors of one to four double-sided positive electrode plates adjacent to the single-sided positive electrode plate are double-sided composite current collectors; and the double-sided composite current collector includes a second polymer layer and the first conductive layers disposed on two surfaces of the second polymer layer. The inventors have found that in impact tests of batteries of a stacked structure, positive electrode plates near two ends of an electrode assembly in a thickness direction significantly affect an impact test pass rate. An outermost single-sided positive electrode plate has the greatest influence on the impact test pass rate, followed by one to four double-sided positive electrode plates adjacent to the single-sided positive electrode plate. Inner positive electrode plates of the electrode assembly have little influence on the impact pass rate. Therefore, in the thickness direction of the electrode assembly, setting current collectors of one to four double-sided positive electrode plates adjacent to the outermost single-sided positive electrode plate as composite current collectors can significantly reduce costs (current collectors of other double-sided positive electrode plates can be traditional metal current collectors) while ensuring the impact pass rate.

In some embodiments of this application, the first polymer layer and the second polymer layer can each be independently made of at least one of polyester, polyamide, modified polyolefin, olefin copolymer, or unsaturated olefin copolymer. Selecting the foregoing materials as materials for polymer layers of different composite current collectors can ensure that the strength, toughness, insulation, and formability of the polymer layers meet requirements of the composite current collectors. This provides good support for the first conductive layer and, in the event of puncture in or impact on the secondary battery, can better protect the internal electrode assembly, thereby enhancing the safety performance of the secondary battery. The materials and thicknesses of the first polymer layer and the second polymer layer can be the same or different.

In some embodiments of this application, a thickness T₁ of the first polymer layer is 3 µm to 15 µm. The thickness of the first polymer layer falling within the above range can balance the strength of the first positive electrode current collector and the energy density of the secondary battery while ensuring improved safety performance of the secondary battery.

In some embodiments of this application, the first conductive layer is made of at least one of aluminum, aluminum alloy, nickel, nickel alloy, or stainless steel; and the second positive electrode current collector made of metal is made of at least one of aluminum, aluminum alloy, nickel, nickel alloy, or stainless steel. Selecting the foregoing materials for the first conductive layer ensures that the first positive electrode current collector and the second positive electrode current collector have good conductivity, meeting the performance requirement for electron conduction. This also provides sufficient strength and weldability, ensuring that the first positive electrode current collector and the second positive electrode current collector have adequate strength during processing and facilitating the welding of a tab onto the first conductive layer.

In some embodiments of this application, a thickness T₂ of the first conductive layer is 0.5 µm to 5 µm. Controlling the thickness T₂ of the first conductive layer within the above range can balance the raw material cost, production cost, and energy density of the secondary battery while further improving the safety performance of the secondary battery.

In some embodiments of this application, the single-sided positive electrode plate further includes an insulating layer, and the insulating layer is disposed on a surface of the single-sided positive electrode plate facing away from the interior of the electrode assembly; where the insulating layer includes an inactive material, and the inactive material includes at least one of boehmite, aluminum oxide, magnesium oxide, silicon oxide, titanium oxide, or magnesium hydroxide; and a mass percentage W₃ of the inactive material is 30% to 70% based on a mass of the insulating layer. The disposition of the insulating layer, first, can reduce the risk of short circuits between the first positive electrode current collector of the outermost single-sided positive electrode plate and the negative electrode active material in the event of puncture, impact, or the like, further enhancing the safety performance of the secondary battery; and second, can help alleviate uneven stress distribution caused by single side coating of the single-sided positive electrode plate to some extent, reducing the curling degree of the single-sided positive electrode plate during cold pressing and improving the processability of the single-sided positive electrode plate.

In some embodiments of this application, a thickness T₃ of the insulating layer is 5 µm to 50 µm. Controlling the thickness T₃ of the insulating layer within the above range can balance the cost, processability, and energy density of the secondary battery while further improving the safety performance of the secondary battery.

In some embodiments of this application, the single-sided positive electrode plate further includes a second conductive layer, and the second conductive layer is disposed between the first positive electrode current collector and the positive electrode active material layer; where the second conductive layer includes a conductive agent, and the conductive agent includes at least one of conductive carbon black, carbon nanotube, carbon fiber, conductive graphite, or graphene; and a mass percentage W₄ of the conductive agent is 30% to 75% based on a mass of the second conductive layer. The disposition of the second conductive layer can improve the adhesion force between the positive electrode active material and the first positive electrode current collector while reducing the interfacial resistance between the positive electrode active material and the first positive electrode current collector, thereby reducing the internal resistance of the secondary battery.

In some embodiments of this application, an adhesion force N₁ between the second conductive layer and the first positive electrode current collector is 3 N/m to 120 N/m, and an adhesion force N₂ between the second conductive layer and the positive electrode active material layer is 3 N/m to 120 N/m. With N₁ and N₂ controlled within the above ranges, the second conductive layer can maintain a good adhesion force with both the first positive electrode current collector and the positive electrode active material layer, reducing the risk of fall-off of the positive electrode active material layer during the cycling of the secondary battery.

In some embodiments of this application, a thickness T₄ of the second conductive layer satisfies 0 µm < T₄ ≤ 4 µm. Controlling the thickness T₄ of the second conductive layer within the above range can allow for high energy density while improving the adhesion force between the positive electrode active material layer and the first positive electrode current collector and reducing the resistance of the secondary battery.

In some embodiments of this application, the first conductive layer is disposed only on the surface of the first polymer layer facing towards the interior of the electrode assembly. This can reduce the proportion of the conductive material layer in the first positive electrode current collector, further enhancing the safety performance of the secondary battery.

In some embodiments of this application, the first conductive layer is alternatively disposed on a surface of the first polymer layer facing away from the interior of the electrode assembly. That is, the first positive electrode composite current collector is a current collector of a traditional "sandwich" structure, with the first conductive layer disposed on both sides of the polymer layer. This can increase the strength of the first positive electrode current collector, and facilitate the welding of a tab. If the total area proportion of the first conductive layer in the cross-section of the first positive electrode current collector remains unchanged, disposing the first conductive layer disposed on two sides of the first polymer layer also helps dissipate heat from the electrode assembly.

The current collector of the negative electrode plate in the electrode assembly of this application can be a type of a negative electrode current collector commonly used in the prior art, such as copper foil, or a composite current collector suitable for negative electrode, or a combination of both.

A second aspect of this application provides an electric apparatus including the secondary battery according to the foregoing embodiments. Therefore, the electric apparatus has good safety performance.

This application provides a secondary battery and an electric apparatus. The secondary battery includes an electrode assembly of a stacked structure, where the electrode assembly includes a positive electrode plate and a negative electrode plate that are stacked, and a separator disposed between the positive electrode plate and the negative electrode plate. An outermost electrode plate of the electrode assembly is a single-sided positive electrode plate. The single-sided positive electrode plate includes a first positive electrode current collector and a positive electrode active material layer, the first positive electrode current collector includes a first polymer layer and a first conductive layer disposed on a surface of the first polymer layer facing towards an interior of the electrode assembly, and the positive electrode active material layer is disposed on the first conductive layer. Positive electrode plates other than the outermost electrode plate in the electrode assembly are double-sided positive electrode plates, the double-sided positive electrode plate includes a second positive electrode current collector and positive electrode active material layers disposed on two surfaces of the second positive electrode current collector, and at least one of the double-sided positive electrode plates has the second positive electrode current collector made of metal. The foregoing overall structure arrangement of the secondary battery improves the safety performance of the secondary battery.

### BRIEF DESCRIPTION OF DRAWINGS

To describe the technical solutions in some embodiments of this application and in the prior art more clearly, the following briefly describes the accompanying drawings required for describing some embodiments and the prior art. Apparently, the accompanying drawings in the following descriptions show only some embodiments of this application, and persons of ordinary skill in the art may still derive other drawings from these accompanying drawings.
FIG. 1 is a schematic structural diagram of an electrode assembly according to some embodiments of this application;
FIG. 2 is a schematic cross-sectional structural diagram of an electrode assembly in a thickness direction thereof according to some embodiments of this application;
FIG. 3 is a schematic cross-sectional structural diagram of a single-sided positive electrode plate in FIG. 2 in a thickness direction thereof;
FIG. 4 is a schematic cross-sectional structural diagram of a single-sided positive electrode plate in a thickness direction thereof according to some embodiments of this application;
FIG. 5 is a schematic cross-sectional structural diagram of a single-sided positive electrode plate in a thickness direction thereof according to some other embodiments of this application;
FIG. 6 is a schematic cross-sectional structural diagram of a first positive electrode current collector in a thickness direction thereof according to some embodiments of this application;
FIG. 7 is a schematic cross-sectional structural diagram of a double-sided positive electrode plate in FIG. 2 in a thickness direction thereof; and
FIG. 8 is a schematic cross-sectional structural diagram of a double-sided positive electrode plate in a thickness direction thereof according to some other embodiments of this application.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on some embodiments of this application shall fall within the protection scope of this application.

It should be noted that in specific embodiments, an example in which a lithium-ion battery is used as a secondary battery is used to illustrate this application. However, the secondary battery of this application is not limited to the lithium-ion battery. Specific technical solutions are as follows:

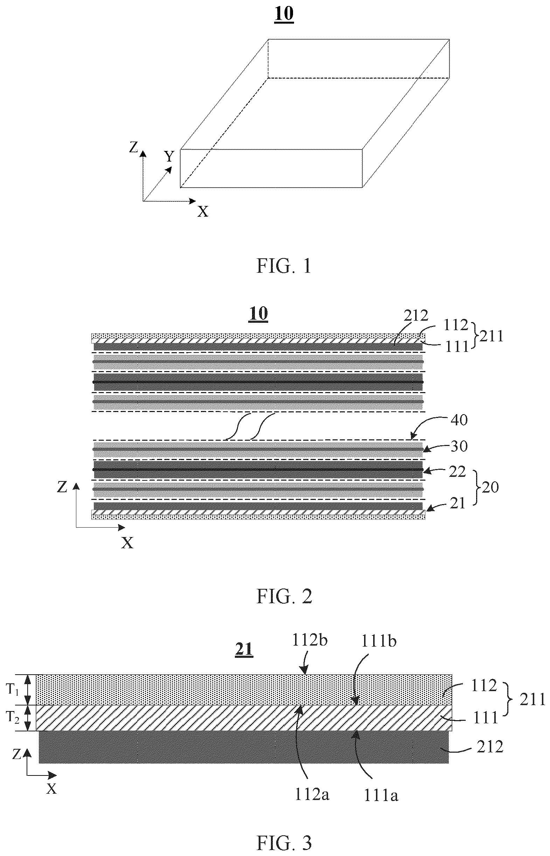

A first aspect of this application provides a secondary battery including an electrode assembly 10 of a stacked structure. As shown in FIG. 1, for ease of understanding, a three-dimensional Cartesian coordinate system is established with a width direction of the electrode assembly 10 as a direction X, a length direction of the electrode assembly 10 as a direction Y, and a thickness direction of the electrode assembly 10 as a direction Z. As shown in FIGs. 2 and 3, the electrode assembly 10 includes a positive electrode plate 20 and a negative electrode plate 30 that are stacked, and a separator 40 disposed between the positive electrode plate 20 and the negative electrode plate 30. The positive electrode plate 20 includes a single-sided positive electrode plates 21 and double-sided positive electrode plates 22. An outermost electrode plate of the electrode assembly 10 is the single-sided positive electrode plate 21. The single-sided positive electrode plate 21 includes a first positive electrode current collector 211 and a positive electrode active material layer 212. The first positive electrode current collector 211 includes a first polymer layer 112 and a first conductive layer 111. The first conductive layer 111 is disposed on a surface 112a, of two opposite surfaces 112a and 112b of the first polymer layer 112 along a thickness direction Z thereof, facing towards an interior of the electrode assembly 10. The positive electrode active material layer 212 is disposed on the first conductive layer 111. That is, it can be understood that the positive electrode active material layer 212 is disposed on a surface 111a, two opposite surfaces 111a and 111b of the first conductive layer 111 along a thickness direction Z thereof, facing towards the interior of the electrode assembly 10. It can be understood that in this application, the width direction, length direction, and thickness direction of the positive electrode plate, negative electrode plate, and separator are the same as those of the electrode assembly. In the electrode assembly of a stacked structure of the secondary battery, the outermost electrode plate is a single-sided positive electrode plate. The first positive electrode current collector in the positive electrode plate is a composite current collector including the first polymer layer and the first conductive layer. In addition, the positive electrode plates other than the outermost electrode plate in the electrode assembly are double-sided positive electrode plates. The double-sided positive electrode plates include the second positive electrode current collector and the positive electrode active material layers disposed on two surfaces of the second positive electrode current collector. At least one double-sided positive electrode plate has the second positive electrode current collector made of metal. With the overall structure arrangement of the electrode assembly, the thickness of the conductive material layer (that is, the first conductive layer) in the first positive electrode current collector of the outermost electrode plate of the electrode assembly is smaller than the thickness of the positive electrode current collector that is entirely made of conductive metal such as aluminum in the prior art. This decreases the proportion of the conductive material layer in the first positive electrode current collector and reduces the proportion of the conductive material layer in the fracture surface of the secondary battery. As a result, under conditions such as impact on the secondary battery, this reduces the likelihood of the first positive electrode current collector of the outermost electrode plate participating in dangerous short circuits, thereby lowering the risk of fire or explosion in the secondary battery. Thus, the safety performance of the secondary battery is improved. In addition, the positive electrode plates other than the outermost electrode plate in the electrode assembly are double-sided positive electrode plates to ensure the energy density of the electrode assembly. Costs can be reduced by setting the material of the current collector of at least one double-sided positive electrode plate to a metal material, that is, a traditional metal current collector, since composite current collectors are more expensive. It should be noted that it is well-known to those skilled in the art that there are two outermost electrode plates at the top and bottom of an electrode assembly of a stacked structure in a thickness direction. That is, the single-sided positive electrode plate in this application refers to two electrode plates at the top and bottom of the electrode assembly of a stacked structure in the thickness direction.

In some embodiments of this application, the second positive electrode current collectors of one to four double-sided positive electrode plates adjacent to the single-sided positive electrode plate are double-sided composite current collectors; and the double-sided composite current collector includes a second polymer layer and the first conductive layers (not shown in the figure) disposed on two surfaces of the second polymer layer, so as to balance the safety and costs.

In some embodiments of this application, the first polymer layer and the second polymer layer are each independently made of at least one of polyester, polyamide, modified polyolefin, olefin copolymer, or unsaturated olefin copolymer. This application does not impose special limitations on the types of polyester, polyamide, modified polyolefin, olefin copolymer, or unsaturated olefin copolymer, as long as the objectives of this application can be achieved. For example, polyester includes but is not limited to polybutylene terephthalate (PBT), polycarbonate (PC), and polyether polyester. Polyamide includes but is not limited to polyamide 6 (PA6) and polyamide 66 (PA66). Modified polyolefin includes but is not limited to polymaleic anhydride, polymethyl methacrylate, and glycidyl methacrylate-grafted polyethylene. Olefin copolymer includes but is not limited to polypropylene and ethylene-propylene copolymer. Unsaturated olefin copolymer includes but is not limited to [pmethyl or ethylene-(methyl)] acrylate copolymer. Selecting the foregoing materials as materials for the polymer layer ensures that the strength, toughness, insulation, and formability of the polymer layers meet requirements of the composite current collectors. This provides good support for the first conductive layer and, in the event of puncture in or impact on the secondary battery, can better protect the internal electrode assembly and also reduce the risk of short circuits caused by contact between the first conductive layer and the housing, thereby enhancing the safety performance of the secondary battery.

In some embodiments of this application, as shown in FIG. 3, a thickness T₁ of the first polymer layer 112 is 3 µm to 15 µm. For example, the thickness T₁ is 3 µm, 5 µm, 7 µm, 9 µm, 11 µm, 13 µm, 15 µm, or any value within the range defined by any two of the foregoing values. With the thickness T₁ of the first polymer layer controlled within the above range, the first polymer layer has a high strength, reducing the risk of fracture of the positive electrode plate during calendaring and tensile stretching processes. This can also control the proportion of the inactive material in the positive electrode plate within a range that does not affect the energy density of the secondary battery. This is more conducive to balancing the strength of the first positive electrode current collector and the energy density of the secondary battery while further improving the safety performance of the secondary battery.

In some embodiments of this application, a thickness T₅ of the second polymer layer is 3 µm to 15 µm. For example, the thickness T₅ is 3 µm, 5 µm, 7 µm, 9 µm, 11 µm, 13 µm, 15 µm, or any value within the range defined by any two of the foregoing values. Controlling the thickness T₅ of the second polymer layer within the above range is more conducive to balancing the strength of the second positive electrode current collector and the energy density of the secondary battery while further improving the safety performance of the secondary battery.

In some embodiments of this application, the first conductive layer is made of at least one of aluminum, aluminum alloy, nickel, nickel alloy, or stainless steel. Selecting the foregoing materials for the first conductive layer ensures that the first positive electrode current collector 211 and the second positive electrode current collector 222 have good conductivity, meeting the performance requirement for electron conduction of the first positive electrode current collector 211 and the second positive electrode current collector 222. This also provides sufficient strength and weldability, ensuring that the first positive electrode current collector 211 and the second positive electrode current collector 222 can have adequate strength during processing and facilitating the welding of a tab onto the first conductive layer.

In some embodiments of this application, the second positive electrode current collector made of metal is made of at least one of aluminum, aluminum alloy, nickel, nickel alloy, or stainless steel.

In some embodiments of this application, as shown in FIG. 3, a thickness T₂ of the first conductive layer 111 is 0.5 µm to 5 µm. For example, the thickness T₂ is 0.5 µm, 1 µm, 2 µm, 3 µm, 4 µm, 5 µm, or any value within the range defined by any two of the foregoing values. With the thickness T₂ of the first conductive layer controlled within the above range, the first conductive layer has a high strength and good conductivity, reducing the risk of defects such as burn through in welding components like tabs on the first positive electrode current collector caused by the thinness of the first conductive layer. The proportion of the first conductive layer of the first positive electrode current collector in the fracture surface of the secondary battery is low, reducing the likelihood of the first conductive layer participating in dangerous short circuits under conditions such as impact on the secondary battery. Thus, this is more conducive to further improving the safety performance of the secondary battery without affecting the volumetric energy density, raw material costs, and production costs of the secondary battery.

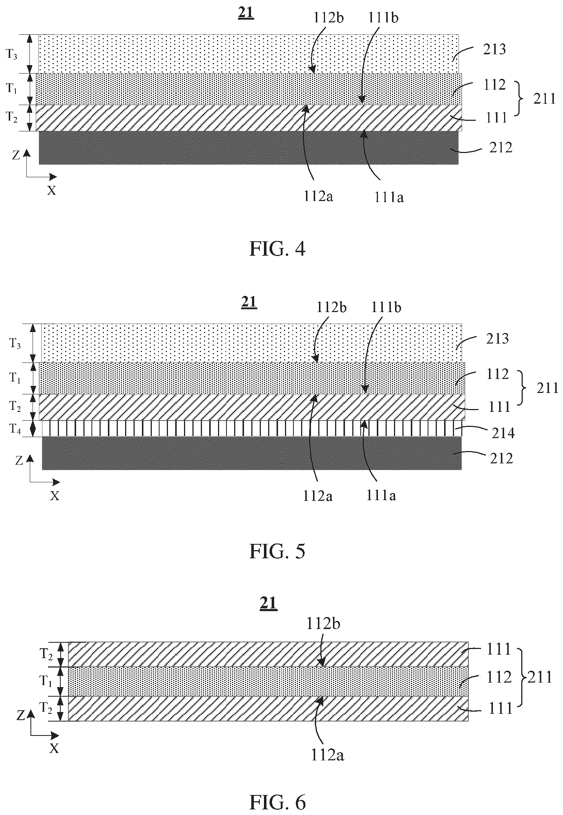

In some embodiments of this application, as shown in FIGs. 2 and 4, the single-sided positive electrode plate 21 further includes an insulating layer 213, and the insulating layer 213 is disposed on a surface of the single-sided positive electrode plate 21 facing away from the interior of the electrode assembly 10. The insulating layer includes an inactive material, and the inactive material includes at least one of boehmite, aluminum oxide, magnesium oxide, silicon oxide, titanium oxide, or magnesium hydroxide. Based on a mass of the insulating layer, a mass percentage of the inactive material is 30% to 70%. For example, the mass percentage W₃ of the inactive material is 30%, 40%, 50%, 60%, 70%, or any value within the range defined by any two of the foregoing values. Selecting the inactive material of the foregoing type, controlling the mass percentage of the inactive material within the above range to prepare the insulating layer, and disposing the insulating layer in the single-sided positive electrode plate can alleviate uneven stress distribution caused by single-side coating of the single-sided positive electrode plate. This reduces the curling degree of the single-sided positive electrode plate during cold pressing and improves the processability of the single-sided positive electrode plate. The disposition of the insulating layer can also reduce the chance of the first conductive layer being exposed in the event of puncture in or impact on the secondary battery, thereby lowering the risk of short circuits between the first positive electrode current collector in the outermost single-sided positive electrode plate of the electrode assembly and the negative electrode active material. Thus, the disposition of the insulating layer can further enhance the safety performance of the secondary battery and improve the processability of the single-sided positive electrode plate.

In some embodiments of this application, the insulating layer further includes a first binder. In this application, the type and quality of the first binder are not particularly limited, as long as the objectives of this application can be achieved. For example, the first binder includes at least one of polyvinylidene fluoride, polytetrafluoroethylene, polypropylene, polyacrylic acid, polyethyl acrylate, polyacrylonitrile, sodium carboxymethyl cellulose, styrene-butadiene rubber, or polyurethane. Based on the mass of the insulating layer, a mass percentage of the first binder is 30% to 70%.

In some embodiments of this application, as shown in FIG. 4, the thickness T₃ of the insulating layer 213 is 5 µm to 50 µm. For example, the thickness T₃ is 5 µm, 10 µm, 15 µm, 20 µm, 25 µm, 30 µm, 35 µm, 40 µm, 45 µm, 50 µm, or any value within the range defined by any two of the foregoing values. Controlling the thickness T₃ of the insulating layer within the above range is more conducive to reducing the curling degree of the single-sided positive electrode plate during cold pressing without affecting the volumetric energy density of the secondary battery. This reduces the chance of the first conductive layer being exposed, thereby lowering the risk of short circuits between the first positive electrode current collector in the outermost single-sided positive electrode plate of the electrode assembly and the negative electrode active material. Thus, the disposition of the insulating layer can further enhance the safety performance of the secondary battery and improve the processability of the single-sided positive electrode plate.

This application does not impose special limitations on the preparation method of the insulating layer, as long as the objectives of this application can be achieved. For example, the insulating layer can be prepared through the following steps: mixing the inactive materials and the first binder to uniformity, adding an organic solvent and stirring the foregoing substances to uniformity to prepare an insulating layer coating, applying the insulating layer coating onto the surface of the single-sided positive electrode plate facing away from the interior of the electrode assembly, and performing drying to obtain the insulating layer. This application does not impose special limitations on the solid content of the insulating layer coating, as long as the objectives of this application can be achieved. This application does not impose special limitations on the type of the organic solvent, as long as the objectives of this application can be achieved. For example, the organic solvent is selected from N-methylpyrrolidone.

In some embodiments of this application, as shown in FIGs. 2 and 5, the single-sided positive electrode plate 21 further includes a second conductive layer 214, and the second conductive layer 214 is disposed between the first positive electrode current collector 211 and the positive electrode active material layer 212. The second conductive layer includes a conductive agent, and the conductive agent includes at least one of conductive carbon black, carbon nanotube, carbon fiber, conductive graphite, or graphene. Based on the mass of the second conductive layer, a mass percentage W₄ of the conductive agent is 30% to 75%. For example, the mass percentage of the conductive agent is 30%, 35%, 40%, 50%, 60%, 70%, 75%, or any value within the range defined by any two of the foregoing values. Selecting the conductive agent of the foregoing type, controlling the mass percentage of the conductive agent within the above range to prepare the second conductive layer, and disposing the second conductive layer in the single-sided positive electrode plate to work with the first positive electrode current collector enhance the interlocking between the positive electrode active materials. The binder (that is, the second binder) in the second conductive layer increases the adhesion force between the positive electrode active material and the first positive electrode current collector, and reduces the interfacial resistance between the positive electrode active material and the first positive electrode current collector, thereby reducing the internal resistance of the secondary battery.

In some embodiments of this application, the second conductive layer further includes a second binder. In this application, the type and quality of the second binder are not particularly limited, as long as the objectives of this application can be achieved. For example, the second binder includes at least one of polyvinylidene fluoride, polytetrafluoroethylene, polypropylene, polyacrylic acid, polyethyl acrylate, polyacrylonitrile, sodium carboxymethyl cellulose, styrene-butadiene rubber, or polyurethane. Based on the mass of the second conductive layer, a mass percentage of the second binder is 25% to 70%. Optionally, the second conductive layer further includes other active materials, such as lithium iron phosphate which has high safety performance and conductivity, to improve the safety performance and cycling performance of the secondary battery. This application does not impose special limitations on the mass percentage of other active materials, as long as the objectives of this application can be achieved. For example, based on the mass of the second conductive layer, the mass percentage of other active materials is 50% to 90%.

In some embodiments of this application, as shown in FIG. 5, an adhesion force N₁ between the second conductive layer 214 and the first positive electrode current collector 211 is 3 N/m to 120 N/m, and an adhesion force N₂ between the second conductive layer 214 and the positive electrode active material layer 212 is 3 N/m to 120 N/m. For example, N₁ is 3 N/m, 10 N/m, 20 N/m, 40 N/m, 60 N/m, 80 N/m, 100 N/m, 120 N/m, or any value within the range defined by any two of the foregoing values. N₂ is 3 N/m, 10 N/m, 20 N/m, 40 N/m, 60 N/m, 80 N/m, 100 N/m, 120 N/m, or any value within the range defined by any two of the foregoing values. Controlling N₁ and N₂ within the above ranges can allow for a high adhesion force between the second conductive layer and both the first positive electrode current collector and the positive electrode active material layer. This can reduce exposure of the first positive electrode current collector during impact on the secondary battery, thereby lowering the likelihood of the first positive electrode current collector directly participating in short circuits. This can also mitigate short circuits caused by a specific short circuit mode (such as surface contact between the first positive electrode current collector and the negative electrode active material layer). Thus, the safety performance of the secondary battery is improved. This can also reduce the risk of the positive electrode material layer falling off during the cycling of the secondary battery.

In some embodiments of this application, as shown in FIG. 5, the thickness T₄ of the second conductive layer 214 satisfies 0 µm < T₄ ≤ 4 µm. For example, the thickness T₄ is 0.1 µm, 0.5 µm, 1 µm, 1.5 µm, 2 µm, 2.5 µm, 3 µm, 4 µm, or any value within the range defined by any two of the foregoing values. Controlling the thickness T₄ of the second conductive layer within the above range is more conducive to obtain a high energy density of the secondary battery while improving the adhesion force between the positive electrode active material layer and the first positive electrode current collector and reducing the resistance of the secondary battery.

This application does not impose special limitations on the preparation method of the second conductive layer, as long as the objectives of this application can be achieved. For example, the second conductive layer can be prepared through the following steps: mixing the conductive agent and the second binder to uniformity, adding an organic solvent and stirring them to uniformity to prepare a second conductive layer coating, and applying the second conductive layer coating onto a surface of the first positive electrode current collector facing towards the interior of the electrode assembly, followed by drying to obtain the second conductive layer. This application does not impose special limitations on the solid content of the second conductive layer coating, as long as the objectives of this application can be achieved. This application does not impose special limitations on the type of organic solvent, as long as the objectives of this application can be achieved. For example, the organic solvent is selected from N-methylpyrrolidone. Optionally, the second conductive layer slurry may further include other active materials.

In some embodiments of this application, as shown in FIGs. 2 to 5, the first conductive layer 111 is disposed only on the surface 112a of the first polymer layer 112 facing towards the interior of the electrode assembly 10. That is, the first positive electrode current collector 211 consists of the first polymer layer 112 and one first conductive layer 111, with the first conductive layer 111 disposed on the surface 112a, of two opposite surfaces 112a and 112b of the first polymer layer 112 along the thickness direction Z thereof, facing towards the interior of the electrode assembly 10. Using the first positive electrode current collector in the single-sided positive electrode plate ensures good conductivity of the first positive electrode current collector, and is more conducive to reducing the proportion of the first conductive layer in the fracture surface of the secondary battery. As a result, under conditions such as impact on the secondary battery, this reduces the likelihood of the first conductive layer participating in dangerous short circuits, thereby lowering the risk of fire or explosion in the secondary battery. As a result, the safety performance of the secondary battery is improved.

In some embodiments of this application, as shown in FIG. 6, the first conductive layer 111 is also disposed on a surface of the first polymer layer 112 facing away from the interior of the electrode assembly 10. That is, the first positive electrode current collector 211 consists of the first polymer layer 112 and two first conductive layers 111. The first polymer layer 112 includes two opposite surfaces 112a and 112b along its thickness direction Z. A surface facing towards the interior of the electrode assembly 10 is the surface 112a and a surface facing away from the interior of the electrode assembly 10 is the surface 112b. The two first conductive layers 111 are disposed on the surfaces 112a and 112b, respectively. Thus, this can increase the strength of the first positive electrode current collector 211, facilitating the welding of tabs. If the total area proportion of the first conductive layer in the cross-section of the first positive electrode current collector remains unchanged, disposing the first conductive layers on two sides of the polymer layer is also conducive to improving heat dissipation of the electrode assembly without increasing the proportion of the first conductive layer in the fracture surface of the secondary battery. This does not increase the likelihood of the whole first conductive layer participating in dangerous short circuits under conditions such as impact on the secondary battery. Further, the first positive electrode current collector in the above embodiments can also be used as the second positive electrode current collector in the double-sided positive electrode plate.

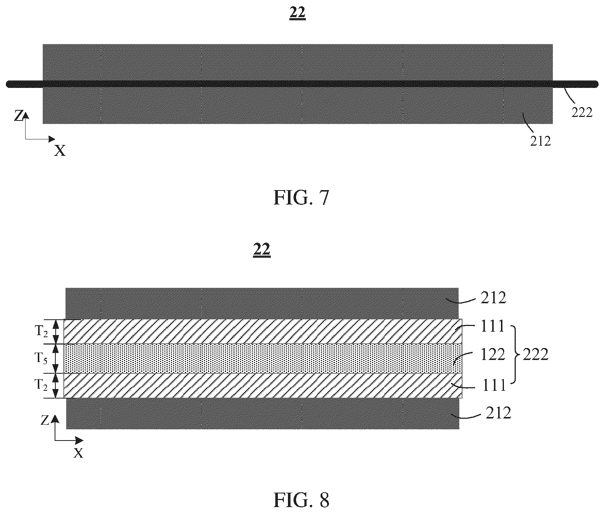

In some embodiments of this application, as shown in FIGs. 2, 7, and 8, positive electrode plates 20 other than the outermost electrode plate in the electrode assembly 10 are double-sided positive electrode plates 22. The double-sided positive electrode plate 22 includes a second positive electrode current collector 222 and positive electrode active material layers 212 disposed on two surfaces of the second positive electrode current collector 222. The second positive electrode current collector 222 is a double-sided composite current collector (as shown in FIG. 8) or aluminum foil. As shown in FIG. 8, the second positive electrode current collector 222, namely, the double-sided composite current collector includes a second polymer layer 122 and first conductive layers 111 disposed on two surfaces of the second polymer layer 122. The aluminum foil in this application is well known aluminum foil used as a positive electrode current collector in the field.

This application does not impose special limitations on the preparation methods of the first positive electrode current collector and the double-sided composite current collector, and well known preparation methods in the field can be used, as long as the objectives of this application can be achieved.

In this application, the positive electrode active material layers in the single-sided positive electrode plate and the double-sided positive electrode plate may be the same or different. This is not particularly limited in this application, as long as the objectives of this application can be achieved.

The positive electrode active material layer of this application includes a positive electrode active material. A type of the positive electrode active material is not particularly limited in this application, as long as the objectives of this application can be achieved. For example, the positive electrode active material may include at least one of nickel cobalt lithium manganate (for example, common NCM811, NCM622, NCM523, or NCM111), lithium nickel cobalt aluminate, lithium iron phosphate, lithium-rich manganese-based material, lithium cobalt oxide (LiCoO₂), lithium manganate, lithium iron manganese phosphate, or lithium titanate. In this application, the positive electrode active material may further include a non-metal element, for example, fluorine, phosphorus, boron, chlorine, silicon, sulfur, or other elements. These elements can further improve stability of the positive electrode active material. Optionally, the positive electrode active material layer further includes a conductive agent and a binder. This application does not particularly limit the types of the conductive agent and the binder in the positive electrode active material layer, as long as the objectives of this application can be achieved. A mass ratio of the positive electrode active material, the conductive agent, and the binder in the positive electrode active material layer is not particularly limited in this application, and persons skilled in the art can make a selection based on actual needs, as long as the objectives of this application can be achieved. For example, the mass ratio between the positive electrode active material, the conductive agent, and the binder in the positive electrode active material layer is (97.5-97.9):(0.9-1.7):(1.0-2.0).

The thickness of the positive electrode active material layer is not particularly limited in this application, as long as the objectives of this application can be achieved. For example, the thickness of the positive electrode active material layer ranges from 30 µm to 120 µm.

The negative electrode plate in this application includes a negative electrode current collector and a negative electrode active material layer disposed on at least one surface of the negative electrode current collector. The "negative electrode active material layer disposed on at least one surface of the negative electrode current collector" means that the negative electrode active material layer may be disposed on one surface of the negative electrode current collector in its thickness direction, or on two surfaces of the negative electrode current collector in its thickness direction. It should be noted that the "surface" herein may be an entire region of the negative electrode current collector, or a partial region of the negative electrode current collector. This is not particularly limited in this application, as long as the objectives of this application can be achieved. The negative electrode current collector is not particularly limited in this application, as long as the objectives of this application can be achieved. For example, the negative electrode current collector may include copper foil, copper alloy foil, nickel foil, titanium foil, nickel foam, copper foam, or the like. The negative electrode active material layer includes a negative electrode active material. This application does not particularly limit a type of the negative electrode active material, as long as the objectives of this application can be achieved. For example, the negative electrode active material may include at least one of natural graphite, artificial graphite, soft carbon, hard carbon, mesophase carbon microspheres, tin-based material, silicon-based material, lithium titanate, transition metal nitride, or natural flake graphite. Optionally, the negative electrode active material layer further includes at least one of a conductive agent, a thickener, or a binder. This application does not particularly limit the types of the conductive agent, the thickener, and the binder in the negative electrode active material layer, as long as the objectives of this application can be achieved. This application does not particularly limit the mass ratio of the negative electrode active material, the conductive agent, the thickener, and the binder in the negative electrode active material layer, as long as the objectives of this application can be achieved. For example, the mass ratio between the negative electrode active material, the conductive agent, the thickener, and the binder in the negative electrode active material layer is (97-98):(0-1.5):(0.5-1.5):(1.0-1.9).

Thicknesses of the negative electrode current collector and the negative electrode active material layer are not particularly limited in this application, as long as the objectives of this application can be achieved. For example, the thickness of the negative electrode current collector is 5 µm to 20 µm, and the thickness of the negative electrode active material layer is 30 µm to 120 µm.

This application has no particular limitation on the separator, provided that the objective of this application can be achieved. For example, a material of the separator may include but is not limited to at least one of polyethylene (PE) and polypropylene (PP)-based polyolefin (PO), polyester (for example, polyethylene terephthalate (PET)), cellulose, polyimide (PI), polyamide (PA), spandex, or aramid; and a type of the separator may include but is not limited to at least one of woven film, non-woven film (non-woven fabric), microporous film, composite film, separator paper, laminated film, or spinning film. For example, the separator may include a substrate layer and a surface treatment layer. The substrate layer may be a non-woven fabric, film, or composite film having a porous structure, and a material of the substrate layer may include at least one of polyethylene, polypropylene, polyethylene glycol terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by a mixture of a polymer and an inorganic substance. For example, the inorganic substance layer includes inorganic particles and a binder. The inorganic particle is not particularly limited, and for example, may be selected from at least one of aluminum oxide, silicon oxide, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and for example, may be selected from at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In this application, the structure of the electrode assembly is a stacked structure, and the electrode assembly includes multiple tabs. Specifically, one positive electrode tab and one negative electrode tab can be led out from each positive electrode plate and negative electrode plate, respectively. As a result, one electrode assembly of a stacked structure ultimately contains multiple positive electrode tabs and negative electrode tabs which are then welded onto metal sheets via transfer welding to lead out the positive electrode tabs and negative electrode tabs.

In this application, the "tab" generally refers to a metal conductor led out from the positive electrode plate or the negative electrode plate, and is used for series or parallel connection to other parts of the electrochemical apparatus. The positive electrode tab is led out from the positive electrode plate, and the negative electrode tab is led out from the negative electrode plate. This application imposes no special restrictions on the material of the tabs, as long as the objectives of this application can be achieved. For example, tab materials well-known in the field may be used.

The secondary battery in this application further includes an electrolyte. The electrolyte is not particularly limited in this application and can be selected by persons skilled in the art depending on actual requirements, as long as the objectives of this application can be achieved. For example, at least one of ethylene carbonate (also referred to as ethylene carbonate, EC for short), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) is mixed at a specific mass ratio to obtain a non-aqueous organic solvent, and then a lithium salt is added for dissolving and mixing to uniformity. The "mass ratio" is not particularly limited in this application, as long as the objectives of this application can be achieved. The type of the lithium salt is not limited in this application, as long as the objectives of this application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium bis(oxalato)borate (LiBOB), or lithium difluoroborate. The concentration of the lithium salt in the electrolyte is not particularly limited in this application, as long as the objectives of this application can be achieved. For example, the concentration of the lithium salt is 1.0 mol/L to 2.0 mol/L.

The secondary battery of this application further includes a housing. The housing is not particularly limited in this application, and persons skilled in the art can make a selection based on actual needs, as long as the objectives of this application can be achieved. For example, the housing may include an aluminum-plastic film.

The secondary battery of this application is not particularly limited, and may include an apparatus in which electrochemical reactions take place. For example, the secondary battery may include but is not limited to a lithium metal secondary battery, a lithium-ion secondary battery (lithium-ion battery), a sodium-ion secondary battery, a lithium polymer secondary battery, and a lithium-ion polymer secondary battery.

A preparation method of the secondary battery is not particularly limited in this application, and a well-known preparation method in the art can be used, as long as the objectives of this application can be achieved. For example, the preparation method of the secondary battery includes, but is not limited to, the following steps: stacking the positive electrode plate, the separator, and the negative electrode plate in sequence, then securing the four corners of the entire stacked structure to obtain an electrode assembly of a stacked structure, placing the electrode assembly into the housing, and injecting the electrolyte into the housing, followed by sealing, to obtain an electrochemical apparatus. In addition, an overcurrent prevention element, a guide plate, and the like may also be placed in the housing as needed, so as to prevent pressure increase, overcharge, and over-discharge in the electrochemical apparatus.

A second aspect of this application provides an electric apparatus including the secondary battery according to the foregoing embodiments.

The electric apparatus is not particularly limited in this application, and may be a well-known electric apparatus used in the prior art. For example, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

The following describes some embodiments of this application more specifically by using examples and comparative examples. Various tests and evaluations are performed in the following methods.

### Test method and device:

### Testing of adhesion forces N₁ and N₂:

A positive electrode plate sample with a width of 30 mm and a length of 120 mm was cut. Double-sided tape with a width of 20 mm and a length of 100 mm was used to fix the sample onto a steel plate with the test surface facing downward. One end of a paper strip with a width equal to that of the positive electrode plate and a length exceeding the sample length by 150 mm was placed under the positive electrode plate and secured with crepe tape. The steel plate was then fixed to the base of a Gotech tensile machine, and the other end of the paper strip was fixed to the upper clamp of the machine. The Gotech tensile machine was started. Once the tensile force stabilized, the tensile data was the adhesion force.

### Test for impact pass rate:

After fully charged, the lithium-ion battery from each example and comparative example was placed as samples on a flat iron plate. A round bar with a diameter of φ15.8±0.1 mm and a length of at least 6 cm was positioned perpendicular to the sample. A hammer weighing 9.1±0.1 kg was dropped from a vertical free state at a distance of 61±2.5 cm from the intersection of the round bar and the sample.

Pass criterion: the lithium-ion battery that did not catch fire or explode passed the test.

100 lithium-ion batteries were tested for each example or comparative example. Impact pass rate (%) = pass number/100 × 100%.

### Example 1-1

### <Preparation of positive electrode plate>

### (1) Preparation of single-sided positive electrode plate

The first positive electrode current collector 211 shown in FIG. 6 was selected. The first positive electrode current collector 211 included a first polymer layer 112 and first conductive layers 111 disposed on two surfaces of the first polymer layer 112. The polymer layer was made of PBT (with a weight-average molecular weight of 3×10⁴) with a thickness T₁ of 6 µm, and the first conductive layer was made of aluminum alloy (grade 1235) with a thickness T₂ of 1 µm.

A positive electrode active material lithium iron phosphate, a positive electrode binder polyvinylidene fluoride (PVDF for short, with a weight-average molecular weight of 5×10⁵), and a positive electrode conductive agent conductive carbon black (SP) were mixed in a mass ratio of 97.6:1.3:1.1. N-methylpyrrolidone was added, and the mixture was stirred under vacuum to uniformity to obtain a positive electrode slurry. The positive electrode slurry had a solid content of 75wt%. The positive electrode slurry was uniformly applied on a surface of the first positive electrode current collector with a thickness of 10 µm, dried at 85°C, and then subjected to drying, cold pressing, cutting, and slitting to obtain a single-sided positive electrode plate with dimensions of 38mm × 58mm.

### (2) Preparation of double-sided positive electrode plate

A positive electrode active material lithium iron phosphate, a positive electrode binder PVDF, and a positive electrode conductive agent SP were mixed in a mass ratio of 97.6:1.3:1.1. N-methylpyrrolidone was added, and the mixture was stirred under vacuum to uniformity to obtain a positive electrode slurry. The positive electrode slurry had a solid content of 75wt%. The positive electrode slurry was uniformly applied onto one surface of a second positive electrode current collector aluminum foil with a thickness of 10 µm, and the aluminum foil was dried at 90°C. The foregoing steps were repeated on the other surface of the aluminum foil to obtain a double-sided positive electrode plate. Then cold pressing, cutting, and slitting were performed to obtain a double-sided positive electrode plate with dimensions of 38 mm×58 mm.

### <Preparation of negative electrode plate>

A negative electrode active material artificial graphite, a thickener sodium carboxymethyl cellulose (CMC-Na for short, with a weight-average molecular weight of 3×10⁵), and a binder styrene-butadiene rubber (SBR for short, with a weight-average molecular weight of 2×10⁵) were mixed at a mass ratio of 98:1:1, added with deionized water, and well stirred by a vacuum stirrer to obtain a negative electrode slurry with a solid content of 75wt%. The negative electrode slurry was evenly applied on one surface of a negative electrode current collector copper foil having a thickness of 12 µm, and was dried at 85°C to obtain a negative electrode having a coating thickness of 130 µm and one surface coated with the negative electrode active material layer. The foregoing steps were repeated on another surface of the negative electrode current collector to obtain a negative electrode plate coated with negative electrode active material layers on two surfaces. Drying was performed at 85°C for 1 h, followed by cold pressing, cutting, and slitting, to obtain a negative electrode plate with dimensions of 41 mm×61 mm.

### <Preparation of electrolyte>

EC, DEC, PC, PP, and VC were mixed in a mass ratio of 20:30:20:28:2 to obtain a non-aqueous organic solvent. A lithium salt LiPF₆ was then mixed with the non-aqueous organic solvent in a mass ratio of 8:92 to prepare an electrolyte.

### <Preparation of separator>

A porous polyethylene film with a thickness of 7 µm was used.

### <Preparation of lithium-ion battery>

The prepared double-sided positive electrode plates and the negative electrode plates were alternately stacked, starting and ending with the negative electrode plates, and the separator was placed between the double-sided positive electrode plate and the negative electrode plate. The single-sided positive electrode plate was stacked on the outermost layer of the semi-finished electrode assembly, with the positive electrode active material layer of the single-sided positive electrode plate facing the interior of the electrode assembly. The four corners were fixed to obtain an electrode assembly of a stacked structure. There were 2 single-sided positive electrode plates, 15 double-sided positive electrode plates, 16 negative electrode plates, and 32 separators.

The electrode assembly was put into an aluminum-plastic film housing, and was dehydrated at 80°C, and the prepared electrolyte was injected. Then, after processes including vacuum packaging, standing, formation, and degassing, a lithium-ion battery was obtained.

### Example 1-2 to Example 1-14

The same as Example 1-1 except that the related preparation parameters were adjusted according to Table 1.

### Example 2-1

### <Preparation of positive electrode plate>

### (1) Preparation of single-sided positive electrode plate

A positive electrode active material lithium iron phosphate, a positive electrode binder PVDF, and a positive electrode conductive agent SP were mixed in a mass ratio of 97.6:1.3:1.1. N-methylpyrrolidone was added, and the mixture was stirred under vacuum to uniformity to obtain a positive electrode slurry. The positive electrode slurry had a solid content of 75wt%. An inactive material boehmite and a first binder PVDF were mixed in a mass ratio of 30:70. N-methylpyrrolidone was added, and the mixture was stirred to uniformity under vacuum to obtain an insulating layer slurry with a solid content of 30wt%.

The positive electrode slurry was uniformly applied onto one surface of a first positive electrode current collector with a thickness of 10 µm, and dried at 85°C. The insulating layer slurry was uniformly applied on the other surface of the first positive electrode current collector and dried at 85°C to obtain an insulating layer with a thickness of 10 µm. Then cold pressing, cutting, and slitting were performed to obtain a single-sided positive electrode plate with dimensions of 38 mm×58 mm.

The rest was the same as Example 1-1.

### Example 2-2 to Example 2-3

The same as Example 2-1 except that the related preparation parameters were adjusted according to Table 2.

### Example 2-4 to Example 2-7

The same as Example 2-1 except that the mass percentage W₃ of the inactive material was adjusted according to Table 2, and the mass percentage of the first binder changed accordingly, with the sum of their mass percentages being 100%.

### Example 2-8 to Example 2-12

The same as Example 2-1 except that the related preparation parameters were adjusted according to Table 2.

### Example 3-1

### <Preparation of positive electrode plate>

### (1) Preparation of single-sided positive electrode plate

A positive electrode active material lithium iron phosphate, a positive electrode binder PVDF, and a positive electrode conductive agent SP were mixed in a mass ratio of 97.6:1.3:1.1. N-methylpyrrolidone was added, and the mixture was stirred under vacuum to uniformity to obtain a positive electrode slurry. The positive electrode slurry had a solid content of 75wt%. An inactive material boehmite and a first binder PVDF were mixed in a mass ratio of 30:70. N-methylpyrrolidone was added, and the mixture was stirred to uniformity under vacuum to obtain an insulating layer slurry with a solid content of 30wt%. A conductive agent SP and a second binder PVDF were mixed in a mass ratio of 35:65. N-methylpyrrolidone was added, and the mixture was stirred to uniformity under vacuum to obtain a second conductive layer slurry with a solid content of 30wt%.

The second conductive layer slurry was uniformly applied on one surface of the first positive electrode current collector, dried at 85°C to form a second conductive layer with a thickness of 1 µm. The positive electrode slurry was uniformly applied on the surface of the second conductive layer and dried at 85°C. The insulating layer slurry was uniformly applied on the other surface of the first positive electrode current collector and dried at 85°C to obtain an insulating layer with a thickness of 10 µm. Then cold pressing, cutting, and slitting were performed to obtain a single-sided positive electrode plate with dimensions of 38 mm×58 mm.

The rest was the same as Example 1-1.

### Example 3-2

The same as Example 3-1 except that the related preparation parameters were adjusted according to Table 3.

### Example 3-3 to Example 3-6

The same as Example 3-1 except that the mass percentage W₄ of the conductive agent was adjusted according to Table 3, and the mass percentage of the second binder changed accordingly, with the sum of their mass percentages being 100%.

### Example 3-7 to Example 3-9

The same as Example 3-1 except that the related preparation parameters were adjusted according to Table 3.

### Example 4-1

### <Preparation of positive electrode plate>

### (1) Preparation of single-sided positive electrode plate

The first positive electrode current collector 211 shown in FIG. 3 was selected. The first positive electrode current collector 211 included a first polymer layer 112 and a first conductive layer 111 disposed on one surface 112a of the first polymer layer 112.

The rest was the same as Example 1-1.

### Example 4-2

The same as Example 4-1 except that related preparation parameters were adjusted according to Table 4.

### Example 4-3

The same as Example 2-1 except that the first positive electrode current collector the same as Example 4-1 was used.

### Example 4-4

The same as Example 3-1 except that the first positive electrode current collector the same as Example 4-1 was used.

### Example 4-5

### <Preparation of positive electrode plate>

### (2) Preparation of double-sided positive electrode plate

The second positive electrode current collector 222 shown in FIG. 8 was used as the double-sided positive electrode plate most adjacent to the single-sided positive electrode plate. The second positive electrode current collector 222 included a second polymer layer with the same material and dimensions as the first polymer layer 112 in Example 3-1 and first conductive layers 111 disposed on two surfaces of the second polymer layer. The second polymer layer was made of PBT (with a weight-average molecular weight of 3×10⁴) with a thickness T₅ of 6 µm, and the first conductive layer was made of aluminum alloy (grade 1235) with a thickness T₂ of 1 µm.

A positive electrode active material lithium iron phosphate, a positive electrode binder PVDF, and a positive electrode conductive agent SP were mixed in a mass ratio of 97.6:1.3:1.1. N-methylpyrrolidone was added, and the mixture was stirred under vacuum to uniformity to obtain a positive electrode slurry. The positive electrode slurry had a solid content of 75wt%. The positive electrode slurry was uniformly applied onto one surface of a second positive electrode current collector with a thickness of 10 µm, and the aluminum foil was dried at 90°C. The foregoing steps were repeated on the other surface of the second positive electrode current collector to obtain a double-sided positive electrode plate. Then cold pressing, cutting, and slitting were performed to obtain a double-sided positive electrode plate with dimensions of 38 mm×58 mm.

The rest was the same as Example 3-1.

### Example 4-6 to Example 4-8

The same as Example 4-5 except that the number of double-sided positive electrode plates made of composite current collectors adjacent to the single-sided positive electrode plate was different.

### Comparative Example 1

The same as Example 1-1 except that the first positive electrode current collector was replaced with an aluminum foil, the same as the second positive electrode current collector.

### Comparative Example 2

The same as Example 2-1 except that the first positive electrode current collector was replaced with an aluminum foil, the same as the second positive electrode current collector.

### Comparative Example 3

The same as Example 3-1 except that the first positive electrode current collector was replaced with an aluminum foil, the same as the second positive electrode current collector.

The preparation parameters and performance parameters of the examples and comparative examples are shown in Table 1 to Table 4.

**Table 1**

| | Material of first polymer layer | T₁ (µm) | Material of first conductive layer | T₂ (µm) | Impact pass rate (%) |
|---|---|---|---|---|---|
| Example 1-1 | PBT | 6 | Aluminum alloy | 1 | 80 |
| Example 1-2 | PBT | 10. | Aluminum alloy | 1 | 78 |
| Example 1-3 | PBT | 15 | Aluminum alloy | 1 | 72 |
| Example 1-4 | PBT | 3 | Aluminum alloy | 1 | 85 |
| Example 1-5 | PBT | 2 | Aluminum alloy | 1 | 77 |
| Example 1-6 | PBT | 16 | Aluminum alloy | 1 | 68 |
| Example 1-7 | PBT | 6 | Aluminum alloy | 1.5 | 79 |
| Example 1-8 | PBT | 6 | Aluminum alloy | 2 | 75 |
| Example 1-9 | PBT | 6 | Aluminum alloy | 0.5 | 85 |
| Example 1-10 | PBT | 6 | Aluminum alloy | 5 | 63 |
| Example 1-11 | PBT | 6 | Aluminum alloy | 0.3 | 90 |
| Example 1-12 | PBT | 6 | Aluminum alloy | 6 | 55 |
| Example 1-13 | Polymethylmethacrylate | 6 | Aluminum alloy | 0.5 | 80 |
| Example 1-14 | PBT | 6 | Stainless steel | 0.5 | 79 |
| Comparative Example 1 | \ | \ | Aluminum foil | 10 | 50 |

| | | | | | |
|---|---|---|---|---|---|
| Note: "\" in Table 1 means that there is no related preparation parameter. | | | | | |

It can be seen from Example 1-1 to Example 1-14 and Comparative Example 1 that with the design of the overall structure of the electrode assembly of the secondary battery of this application, the outermost electrode plate of the electrode assembly is set as the single-sided positive electrode plate, and the first positive electrode current collector in the single-sided positive electrode plate includes the first polymer layer and the first conductive layer disposed on the surface of the first polymer layer facing towards the interior of the electrode assembly. This makes the thickness of the first conductive layer in the outermost electrode plate of the electrode assembly in Examples 1-1 to 1-14 smaller than the thickness of the aluminum foil in Comparative Example 1, thereby decreasing the proportion of the first conductive layer in the fracture surface of the secondary battery. The insulating properties of the first polymer layer reduce the likelihood of contact between the first conductive layer and the negative electrode active material in the negative electrode plate. When impact tests are conducted on the secondary batteries in the examples, the impact pass rates are higher, indicating that the safety performance of the secondary batteries in this application is higher.

The thickness T₁ of the first polymer layer generally affects the safety performance of the secondary battery. It can be seen from Example 1-1 to Example 1-6 that secondary batteries with the thickness T₁ of the first polymer layer within the range of this application exhibit higher impact pass rates, indicating that they have good safety performance. It can also be seen that with the thickness T₁ ranging from 3 µm to 15 µm, as the thickness T₁ of the first polymer layer increases, the impact pass rate of the secondary battery decreases, indicating that it has reduced safety performance. This is because a larger thickness T₁ of the first polymer layer results in greater elongation of the first positive electrode current collector during impact testing, leading to a more chaotic fracture surface. This increases the risk of contact between the conductive material of the first conductive layer and the negative electrode plate at the fracture surface of the secondary battery, thereby reducing the impact pass rate of the secondary battery and affecting the safety performance of the secondary battery. Therefore, Example 1-6 has a lower impact pass rate than Example 1-5. Although Example 1-5 has a smaller thickness T₁, the strength of the electrode plate is too low, making the first positive electrode current collector prone to fracture during impact, thereby resulting in a non-optimal impact pass rate. Additionally, the excessively low strength of the current collector makes the electrode plate prone to wrinkling during production and phenomena such as indentation of the electrode plate during cold pressing of the active material. Therefore, the thickness of the first polymer layer in Example 1-5 is not preferred.

The thickness T₂ of the first conductive layer generally affects the safety performance of the secondary battery. It can be seen from Example 1-1, and Example 1-7 to Example 1-12 that secondary batteries with the thickness T₂ of the first conductive layer within the range of this application exhibit higher impact pass rates, indicating that they have good safety performance. It can also be seen that as the thickness T₂ of the first conductive layer increases, the impact pass rate of the secondary battery decreases, indicating that it has reduced safety performance. This is because a larger thickness T₂ of the first conductive layer increases the proportion of the conductive material of the first conductive layer at the fracture surface of the secondary battery, raising the risk of contact between the first conductive layer and the negative electrode plate, thereby reducing the impact pass rate of the secondary battery and affecting the safety performance of the secondary battery. However, it should be noted that in Example 1-11, although the first conductive layer has small T₂ and achieves a high impact pass rate, the current collector has a low strength during production, making manufacturing difficult. In addition, it is highly likely that tab welding results in burn-through. Therefore, the thickness of the first conductive layer is not preferred.

The material of the polymer layer generally affects the safety performance of the secondary battery. It can be seen from Examples 1-1 and 1-13 that secondary batteries with the material of the polymer layer within the range of this application exhibit higher impact pass rates, indicating that they have good safety performance.

The material of the first conductive layer generally affects the safety performance of the secondary battery. It can be seen from Examples 1-1 and 1-14 that secondary batteries with the material of the first conductive layer within the scope of this application exhibit higher impact pass rates, indicating that they have good safety performance.

**Table 2**

| | Inactive material | W₃ (%) | T₃ (µm) | Impact pass rate (%) |
|---|---|---|---|---|
| Example 1-1 | \ | \ | \ | 80 |
| Example 2-1 | Boehmite | 30 | 10 | 85 |
| Example 2-2 | Aluminum oxide | 30 | 10 | 85 |
| Example 2-3 | Silicon oxide | 30 | 10 | 83 |
| Example 2-4 | Boehmite | 50 | 10 | 86 |
| Example 2-5 | Boehmite | 70 | 10 | 90 |
| Example 2-6 | Boehmite | 20 | 10 | 82 |
| Example 2-7 | Boehmite | 80 | 10 | 90 |
| Example 2-8 | Boehmite | 30 | 5 | 85 |
| Example 2-9 | Boehmite | 30 | 30 | 90 |
| Example 2-10 | Boehmite | 30 | 50 | 95 |
| Example 2-11 | Boehmite | 30 | 2 | 82 |
| Example 2-12 | Boehmite | 30 | 60 | 95 |
| Comparative Example 2 | Boehmite | 30 | 10 | 52 |

| | | | | |
|---|---|---|---|---|
| Note: "\" in Table 2 indicates no relevant preparation parameters. The difference between Comparative Example 2 and Example 2-1 lies in that the first positive electrode current collector in Comparative Example 2 is aluminum foil. | | | | |

It can be seen from Example 1-1, Example 2-1 to Example 2-12, and Comparative Example 2 that with the design of the overall structure of the electrode assembly of the secondary battery of this application, the outermost electrode plate of the electrode assembly is set as the single-sided positive electrode plate, and the first positive electrode current collector in the single-sided positive electrode plate includes the first polymer layer and the first conductive layer disposed on the surface of the first polymer layer facing towards the interior of the electrode assembly. Further disposing the insulating layer in the single-sided positive electrode plate can further increase the impact pass rate of the secondary battery, thereby further enhancing the safety performance of the secondary battery. In contrast, Comparative Example 2 does not employ the first positive electrode current collector of this application and fails to improve the impact pass rate, indicating that its safety performance is not enhanced.

The type of the inactive material in the insulating layer generally affects the safety performance of the secondary battery. It can be seen from Examples 2-1 to 2-3 that secondary batteries with the type of the inactive material within the range of this application exhibit higher impact pass rates, indicating that the secondary batteries have good safety performance.

The mass percentage W₃ of the inactive material in the insulating layer generally affects the safety performance of the secondary battery. It can be seen from Example 2-1, and Examples 2-4 to 2-7 that secondary batteries with the mass percentage W₃ of the inactive material within the range of this application exhibit higher impact pass rates, indicating that the secondary batteries have good safety performance. Although the lithium-ion battery in Example 2-7 has a high impact pass rate, the mass percentage W₃ of the inactive material in the insulating layer is large, resulting in a low content of the first binder. As a result, the insulating layer and the first positive electrode current collector are prone to poor adhesion inbetween, affecting the yield rate of the positive electrode plate and the usage performance of the secondary battery. Therefore, this is not the preferred option.

The thickness T₃ of the insulating layer generally affects the safety performance of the secondary battery. It can be seen from Example 2-1, and Example 2-8 to Example 2-12 that secondary batteries with the thickness T₃ of the insulating layer within the range of this application exhibit higher impact pass rates, indicating that secondary batteries have good safety performance. Although the lithium-ion battery in Example 2-12 has a high impact pass rate, the thickness T₃ of the insulating layer is large, which compromises the energy density of the secondary battery due to the increased volume. Therefore, this is not the preferred option.

**Table 3**

| | Conductive agent | W₄ (%) | T₄ (µm) | N₁ (N/m) | N₂ (N/m) | Impact pass rate (%) |
|---|---|---|---|---|---|---|
| Example 2-1 | \ | \ | \ | \ | \ | 88 |
| Example 3-1 | SP | 35 | 1 | 35 | 38 | 95 |
| Example 3-2 | Carbon nanotube | 35 | 1 | 33 | 39 | 90 |
| Example 3-3 | SP | 50 | 1 | 30 | 30 | 90 |
| Example 3-4 | SP | 70 | 1 | 25 | 29 | 89 |
| Example 3-5 | SP | 30 | 1 | 39 | 40 | 92 |
| Example 3-6 | SP | 75 | 1 | 25 | 23 | 89 |
| Example 3-7 | SP | 35 | 0.1 | 12 | 16 | 88 |
| Example 3-8 | SP | 35 | 3 | 39 | 45 | 96 |
| Example 3-9 | SP | 35 | 4 | 40 | 48 | 95 |
| Comparative Example 3 | SP | 35 | 1 | 30 | 35 | 69 |

| | | | | | | |
|---|---|---|---|---|---|---|
| Note: "\" in Table 3 indicates no relevant preparation parameters. The difference between Comparative Example 3 and Example 3-1 lies in that the first positive electrode current collector in Comparative Example 3 is aluminum foil. | | | | | | |

It can be seen from Example 2-1, Example 3-1 to Example 3-9, and Comparative Example 3 that with the design of the overall structure of the electrode assembly of the secondary battery of this application, the outermost electrode plate of the electrode assembly is set as the single-sided positive electrode plate, and the first positive electrode current collector in the single-sided positive electrode plate includes the first polymer layer and the first conductive layer disposed on the surface of the first polymer layer facing towards the interior of the electrode assembly. Further disposing the insulating layer and the second conductive layer in the single-sided positive electrode plate can even further increase the impact pass rate of the secondary battery, thereby even further enhancing the safety performance of the secondary battery. In contrast, Comparative Example 3 does not employ the first positive electrode current collector of this application and fails to improve the impact pass rate, indicating that its safety performance is not enhanced.

The type of the conductive agent in the second conductive layer generally affects the safety performance of the secondary battery. It can be seen from Examples 3-1 and 3-2 that secondary batteries with the type of the conductive agent within the range of this application exhibit higher impact pass rates, indicating that the secondary batteries have good safety performance.

The mass percentage W₄ of the conductive agent in the second conductive layer generally affects the safety performance of the secondary battery. It can be seen from Example 3-1, and Examples 3-3 to 3-6 that secondary batteries with the mass percentage W₄ of the conductive agent within the range of this application exhibit higher impact pass rates, indicating that the secondary batteries have good safety performance.

The thickness T₄ of the second conductive layer generally affects the safety performance of the secondary battery. It can be seen from Example 3-1, and Example 3-7 to Example 3-9 that secondary batteries with the thickness T₄ of the second conductive layer within the range of this application exhibit higher impact pass rates, indicating that secondary batteries have good safety performance.

**Table 4**

| | Type of first positive electrode current collector | Type of second positive electrode current collector | Ts (µm) | T₂ (µm) | Whether insulating layer is disposed | Whether second conductive layer is disposed | Impact pass rate (%) |
|---|---|---|---|---|---|---|---|
| Example 1-1 | As shown in FIG. 6 | Aluminum foil | 6 | 1 | No | No | 80 |
| Example 2-1 | As shown in FIG. 6 | Aluminum foil | 6 | 1 | Yes | No | 88 |
| Example 3-1 | As shown in FIG. 6 | Aluminum foil | 6 | 1 | Yes | Yes | 92 |
| Example 4-1 | First positive electrode current collector 211 as shown in FIG. 3 | Aluminum foil | 6 | 1 | No | No | 85 |
| Example 4-2 | First positive electrode current collector 211 as shown in FIG. 3 | Aluminum foil | 6 | 0.5 | No | No | 86 |
| Example 4-3 | First positive electrode current collector 211 as shown in FIG. 3 | Aluminum foil | 6 | 1 | Yes | No | 93 |
| Example 4-4 | First positive electrode current collector 211 as shown in FIG. 3 | Aluminum foil | 6 | 1 | Yes | Yes | 96 |
| Example 4-5 | As shown in FIG. 6 | All are made of aluminum foil except that the double-sided positive electrode plate most adjacent to the single-sided positive electrode plate is made of a double-sided composite current collector | 6 | 1 | Yes | Yes | 95 |

| | Type of first positive electrode current collector | Type of second positive electrode current collector | T₅ (µm) | T₂ (µm) | Whether insulating layer is disposed | Whether second conductive layer is disposed | Impact pass rate (%) |
|---|---|---|---|---|---|---|---|
| Example 4-6 | As shown in FIG. 6 | All are made of aluminum foil except that two double-sided positive electrode plates adjacent to the single-sided positive electrode plate are made of double-sided composite current collectors | 6 | 1 | Yes | Yes | 96 |
| Example 4-7 | As shown in FIG. 6 | All are made of aluminum foil except that four double-sided positive electrode plates adjacent to the single-sided positive electrode plate are made of double-sided composite current collectors | 6 | 1 | Yes | Yes | 97 |
| Example 4-8 | As shown in FIG. 6 | All are made of aluminum foil except that six double-sided positive electrode plates adjacent to the single-sided positive electrode plate are made of double-sided composite current collectors | 6 | 1 | Yes | Yes | 97 |

The type of the first positive electrode current collector generally affects the safety performance of the secondary battery. It can be seen from Examples 1-1, 4-1, and 4-2, Examples 2-1 and 4-3, and Examples 3-1 and 4-4 that the selected ones are the first positive electrode current collector of this application whose first conductive layer is disposed only on the surface of the first polymer layer facing towards the interior of the electrode assembly, as well as the first positive electrode current collector whose first conductive layer is not only disposed on the surface of the first polymer layer facing towards the interior of the electrode assembly but also on the surface of the first polymer layer facing away from the interior of the electrode assembly. With the first positive electrode current collectors applied to the secondary batteries, the secondary batteries have high impact pass rates, indicating that they have good safety performance.

The type of the second positive electrode current collector generally affects the safety performance of the secondary battery. It can be seen from Example 3-1, and Examples 4-5 to 4-8 that replacing the double-sided positive electrode plate current collector adjacent to the single-sided positive electrode plate from aluminum foil to composite current collector can further improve the impact pass rate of the battery. However, when more than 4 double-sided positive electrode current collectors are replaced, the impact pass rate cannot be further improved.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A secondary battery, comprising an electrode assembly of a stacked structure, wherein the electrode assembly comprises a positive electrode plate and a negative electrode plate that are stacked, and a separator disposed between the positive electrode plate and the negative electrode plate; wherein
an outermost electrode plate of the electrode assembly is a single-sided positive electrode plate; wherein
the single-sided positive electrode plate comprises a first positive electrode current collector and a positive electrode active material layer, the first positive electrode current collector comprises a first polymer layer and a first conductive layer disposed on a surface of the first polymer layer facing towards an interior of the electrode assembly, and the positive electrode active material layer is disposed on the first conductive layer; and
positive electrode plates other than the outermost electrode plate in the electrode assembly are double-sided positive electrode plates, the double-sided positive electrode plate comprises a second positive electrode current collector and positive electrode active material layers disposed on two surfaces of the second positive electrode current collector, and at least one of the double-sided positive electrode plates has the second positive electrode current collector made of metal.

2. The secondary battery according to claim 1, wherein the second positive electrode current collectors of one to four double-sided positive electrode plates adjacent to the single-sided positive electrode plate are double-sided composite current collectors; and the double-sided composite current collector comprises a second polymer layer and the first conductive layers disposed on two surfaces of the second polymer layer.

3. The secondary battery according to claim 1, wherein the first polymer layer and the second polymer layer are each independently made of at least one of polyester, polyamide, modified polyolefin, olefin copolymer, or unsaturated olefin copolymer.

4. The secondary battery according to claim 1, wherein a thickness T₁ of the first polymer layer is 3 µm to 15 µm.

5. The secondary battery according to claim 1, wherein the first conductive layer is made of at least one of aluminum, aluminum alloy, nickel, nickel alloy, or stainless steel; and
the second positive electrode current collector made of metal is made of at least one of aluminum, aluminum alloy, nickel, nickel alloy, or stainless steel.

6. The secondary battery according to claim 1, wherein a thickness T₂ of the first conductive layer is 0.5 µm to 5 µm.

7. The secondary battery according to claim 1, wherein the single-sided positive electrode plate further comprises an insulating layer, and the insulating layer is disposed on a surface of the single-sided positive electrode plate facing away from the interior of the electrode assembly; wherein
the insulating layer comprises an inactive material, and the inactive material comprises at least one of boehmite, aluminum oxide, magnesium oxide, silicon oxide, titanium oxide, or magnesium hydroxide; and
a mass percentage W₃ of the inactive material is 30% to 70% based on a mass of the insulating layer.

8. The secondary battery according to claim 7, wherein a thickness T₃ of the insulating layer is 5 µm to 50 µm.

9. The secondary battery according to claim 7, wherein the single-sided positive electrode plate further comprises a second conductive layer, and the second conductive layer is disposed between the first positive electrode current collector and the positive electrode active material layer; wherein
the second conductive layer comprises a conductive agent, and the conductive agent comprises at least one of conductive carbon black, carbon nanotube, carbon fiber, conductive graphite, or graphene; and
a mass percentage W₄ of the conductive agent is 30% to 75% based on a mass of the second conductive layer.

10. The secondary battery according to claim 9, wherein an adhesion force N₁ between the second conductive layer and the first positive electrode current collector is 3 N/m to 120 N/m, and an adhesion force N₂ between the second conductive layer and the positive electrode active material layer is 3 N/m to 120 N/m.

11. The secondary battery according to claim 9, wherein a thickness T₄ of the second conductive layer satisfies 0 µm < T₄ ≤ 4 µm.

12. The secondary battery according to claim 1, wherein the first conductive layer is disposed only on the surface of the first polymer layer facing towards the interior of the electrode assembly.

13. The secondary battery according to claim 1, wherein the first conductive layer is disposed on a surface of the first polymer layer facing away from the interior of the electrode assembly.

14. An electric apparatus comprising the secondary battery according to any one of claims 1 to 13.
